# EUROPEAN PATENT APPLICATION

(11) **EP 3 757 079 A1**
(43) Date of publication of application: **30.12.2020**
(21) Application number: 18906878.6
(22) Date of filing: 20.04.2018
(51) Int. Cl.: C03C 8/24, C03C 8/04, C03C 27/10, E06B 3/66, E06B 3/663, C03C 8/08

(54) **LOW-TEMPERATURE FIRED, LEAD-FREE GLASS FRIT, PASTE, AND VACUUM GLASS ASSEMBLY USING SAME**

(30) Priority: 23.02.2018 KR 20180022131; 23.02.2018 KR 20180022132
(71) Applicant: LG Electronics Inc., 07336 SEOUL (KR)
(72) Inventor: CHOI, Wongyu, Seoul 08592 (KR); KIM, Young Seok, Seoul 08592 (KR)
(74) Representative: Vossius & Partner Patentanwälte Rechtsanwälte mbB
(86) International application number: PCT/KR2018/004616
(87) International publication number: WO 2019/164059

(57) **Abstract**

This application relates to a lead-free low temperature calcined glass frit, paste, and a vacuum glass assembly using the same.

The glass frit according to this application has an effect that it has new component system that includes P₂O₅, V₂O₅, TeO₂, CuO, ZnO, and BaO as a specific composition ratio of this application to replace a conventional lead glass composition and enable a low temperature calcination, and a coefficient of thermal expansion (CTE) of the glass frit is matched with that of a glass substrate while not including an inorganic filler or minimizing a content of an inorganic filler, so that a separation or breakage phenomenon does not occur and a durability is excellent.

## Description

### [Technical Field]

This application relates to a lead-free low temperature calcined glass frit, paste, and a vacuum glass assembly using the same.

### [Background Art]

In a glass window or a home appliance, or an electrical and electronic component, etc., such as a vacuum insulation multi-layer glass panel, a display panel, and an organic EL display panel, etc., a sealing or an attachment, etc., is made by a glass frit including an inorganic ceramics particle and a glass composition. Such a sealing glass frit is generally applied in a form of paste and such a glass paste is applied to glass by using a screen printing method or a dispenser method, etc., followed by drying and calcination to give a sealing function.

Conventionally, a PbO-B₂O₃-based glass composition including a very large amount of lead oxide has been widely used. The PbO-B₂O₃-based glass composition has a softening point of about 400 to 450°C and showed a good softening fluidity, and had a relatively high chemical stability.

However, in recent years, a flow of a design in consideration of the environment is stronger worldwide, and a safer material is being demanded. For example, in the case of Europe, a Directive (RoHS Directive) by European Union (EU) on a restriction of a use of a certain hazardous substance in electrical and electronic equipment came into force on July 1, 2006. In the RoHS Directive, a total of six substances including lead were designated as a prohibited substance.

Since the PbO-B₂O₃-based glass composition includes a lot of lead designated as prohibited substance of the RoHS Directive, it is difficult to use it as a sealing glass paste. Accordingly, a development of a novel glass composition that does not include the lead is required. Further, in order to reduce a thermal damage and improve a productivity of various glass sealing parts and electrical and electronic components, a development of a lead-free glass composition that is capable of a softening flow at a low temperature and has a good chemical stability compared to PbO-B₂O₃-based glass composition is strongly demanded.

A P₂O₅-V₂O₅-TeO₂-based lead-free glass composition is known as a lead-free-based glass composition that does not include lead and can be calcined at a low temperature according to the demand for the lead-free glass composition.

However, a conventional P₂O₅-V₂O₅-TeO₂-based glass composition has a problem that a crystallization tendency is increased during calcination, so that it cannot obtain good softening fluidity.

In addition, even if the conventional P₂O₅-V₂O₅-TeO₂-based lead-free glass composition can be calcined at a low temperature, there is a problem that a coefficient of thermal expansion of the conventional P₂O₅-V₂O₅-TeO₂ based lead-free glass composition is not matched with that of a glass substrate so that a separation or breakage phenomenon may occur. In order to lower the coefficient of thermal expansion, there is a problem that a unit cost of a product is increased by using a lot of inorganic fillers.

Further, an Ag₂O-V₂O₅-TeO₂-based lead-free glass composition is known as a lead-free based glass composition that does not include lead and is capable of a calcination at a low temperature.

However, a conventional Ag₂O-V₂O₅-TeO₂-based glass composition has a problem that a crystallization tendency is increased during calciantion and it cannot obtain good softening fluidity.

Further, when the conventional Ag₂O-V₂O₅-TeO₂-based lead-free glass composition is applied to tempered glass used for a home appliance, etc., there is a problem that a coefficient of thermal expansion is not matched with the tempered glass, and a low temperature calcination is difficult, and a glass annealing phenomenon may occur.

Further, the conventional Ag₂O-V₂O₅-TeO₂ based lead-free glass composition has a problem that a coefficient of thermal expansion of the Ag₂O-V₂O₅-TeO₂-based lead-free glass composition is not matched with that of a glass substrate so that a separation or breakage phenomenon may occur even if a calcination is possible at a low temperature.

### [Disclosure]

### [Technical Problem]

It is an object of this application to provide a new lead-free low temperature calcined glass frit that is capable of a calcination at a low temperature as a lead-free glass composition that replaces a conventional lead glass composition.

In particular, it is an object of this application to provide a new lead-free low temperature calcined glass frit that is capable of a calcination at a low temperature and also has a composition ratio that a crystallization tendency is low even during a low temperature calcination.

Further, it is an object of this application to provide a lead-free low temperature calcined glass frit that a coefficient of thermal expansion of the lead-free low temperature calcined glass frit is matched with that of a glass substrate, so that a separation or breaking phenomenon does not occur and a durability is excellent.

### [Technical Solution]

In order to provide a new glass frit that is capable of a calcination at a low temperature as a lead-free glass composition that replaces a conventional lead glass composition, a glass frit according to this application may include 5 to 25 wt% of P₂O₅, 40 to 70 wt% of V₂O₅, 5 to 25 wt% of TeO₂, 1 to 5 wt% of CuO, 1 to 12 wt% of ZnO, and 1 to 5 wt% of BaO.

In addition, in order to provide a glass frit that is capable of a calcination at a low temperature and has a low crystallization tendency even during a low temperature calcination, the content of P₂O₅, V₂O₅, and TeO₂ of the glass frit according to this application can satisfy the following relational expression. [Relational expression] $\begin{matrix}{V}_{2} {O}_{5} \left(wt%\right) / {P}_{2} {O}_{5} \left(wt%\right) < 3.5 \\ {P}_{2} {O}_{5} \left(wt%\right) + {TeO}_{2} \left(wt%\right) > 30\end{matrix}$

Further, in order to provide a glass frit that does not include an inorganic filler or minimizes the content of an inorganic filler and a coefficient of thermal expansion of the glass frit is matched with that of a glass substrate so that a separation or breakage phenomenon does not occur and has an excellent durability, the glass frit according to this application can further include at least one of Bi₂O₃, MnO₂, Fe₂O₃, and Ag₂O.

Next, in order to provide a new glass frit that is capable of a calcination at a low temperature as the lead-free glass composition that replaces the conventional lead glass composition, the glass frit according to another embodiment of this application may include 30 to 50 wt% of V₂O₅, 30 to 50 wt% of TeO₂, 1 to 5 wt% of CuO, 1 to 5 wt% of BaO, 1 to 10 wt% of at least one of of MnO₂, FeO₃, SnO, MoO₃ and ZnO, and 5 to 30 wt% of the inorganic filler.

In addition, in order to provide the glass frit that is capable of a calcination at a low temperature and has a low crystallization tendency at the low temperature calcination, the content of V₂O₅ and the content of TeO₂ of the glass frit according to another embodiment of this application can satisfy the following relational expression. [Relational expression] ${V}_{2} {O}_{5} \left(wt%\right) / {TeO}_{2} \left(wt%\right) < 1$

Further, in order to provide the glass frit that the coefficient of thermal expansion thereof is matched with that of a glass substrate so that the separation or breakage phenomenon may not occur and the durability is excellent, even if the calcinations is possible at the low temperature, in the glass frit according to another embodiment of this application, the inorganic filler may be preferably included with 10 to 20 wt%, and the coefficient of thermal expansion (CTE) after calcination may be in the range of 70 to 90 x 10⁻⁷/°C.

### [Advantageous Effects]

A glass frit according to this application has a new component system including P₂O₅, V₂O₅, TeO₂, CuO, ZnO, and BaO at a specific composition ratio of this application, thereby having an effect of replacing a conventional lead glass composition and being capable of a low temperature calcination.

In addition, the glass frit according to this application can have an effect of being capable of a calcination at a low temperature and having a low crystallization tendency even during a low temperature calcination as it can have an optimal ratio of P₂O₅, V₂O₅, and TeO₂ contents.

Further, the glass frit according to this application may further include at least one of Bi₂O₃, MnO₂, Fe₂O₃ and Ag₂O, and may have a coefficient of thermal expansion (CTE) after calcination in the range of 80 to 100 x 10⁻⁷/°C. There is an effect that an inorganic filler is not included or the content of the inorganic filler is minimized, and a CTE of the glass frit is matched with that of a glass substrate, so that a separation or breakage phenomenon does not occur and a durability is excellent.

Next, the glass frit according to another embodiment of this application has a new composition system including at least one of V₂O₅, TeO₂, CuO, BaO, MnO₂, FeO₃, SnO, MoO₃, and ZnO and an organic filler with a specific composition ratio of this application, and thus, there is an effect that it is capable of replacing the conventional lead glass composition and a calcination is possible at a low temperature of 350°C or less.

In addition, the glass frit according to another embodiment of this application can have an optimal ratio of V₂O₅ and TeO₂, so that there is an effect that it is capable of a calcination at a low temperature and of having a low crystallization tendency even during a low temperature calcination.

Further, the inorganic filler according to another embodiment of this application can be preferably included in 10 to 20 wt%, and the coefficient of thermal expansion (CTE) after calcination may be in the range of 70 to 90 x 10⁻⁷/°C, and thus, there is an effect that the CTE thereof is mated with that of the glass substrate, so that the separation or breakage phenomenon may not occur and the durability is excellent.

### [Best Mode]

The above-mentioned objects, features, and advantages will be described below in detail, and accordingly, those skilled in the art will easily perform the technical idea of this application. In describing this application, when it is determined that a detailed description of the known art related to this application may unnecessarily obscure the gist of this application, a detailed description will be omitted. Hereinafter, the preferred embodiments according to this application will be described in detail.

This application is not limited to the disclosed embodiments below but it may be embodied in many different forms from each other, and the present embodiment is merely provided so that the disclosure of this application is complete, and will fully notify the scope of this application to those skilled in the art.

Hereinafter, a lead-free low temperature calcined glass frit, paste, and a vacuum glass assembly using the same according to this application will be described in detail.

### <A lead-free low temperature calcined glass frit>

### 1. A lead-free low temperature calcined glass frit

A glass frit used as a sealing material generally may have a good fluidity at a low temperature when a property temperature such as a glass transition point and a softening point is low; however, when the property temperature is lowered too much, a crystallization tendency becomes greater, so that a fluidity at a low temperature can be degraded.

Further, when a sealing process is applied to glass used for a home appliance or an electronic appliance, there is a breakage problem of the glass or a problem such as a cost increase in process, etc., and thus a sealing process needs to be applied at 400°C or less. Thus, a glass frit sealing material used in the sealing process has to be capable of a calcination at a low temperature. Further, it has to satisfy a suitable softening fluidity as well as a calcination at the low temperature.

Thus, the present inventors have completed a new glass frit capable of calcination at a low temperature and also having a low crystallization tendency.

The glass frit according to this application may include 5 to 25 wt% of P₂O₅, 40 to 70 wt% of V₂O₅, 5 to 25 wt% of TeO₂, 1 to 5 wt% of CuO, 1 to 12 wt% of ZnO, and 1 to 5 wt% of BaO.

P₂O₅ may be contained in the range of 5 to 25 wt% in order to lower a calcination temperature of the glass frit and to control the fluidity. When P₂O₅ exceeds 25 wt%, there is a problem that a calcination of the glass frit easily becomes difficult, and fluidity is degraded. When P₂O₅ is less than 5 wt%, a problem may occur that a coefficient of thermal expansion (CTE) of the glass frit is increased and an adhesive force with a glass substrate may be lowered.

V₂O₅ may have an effect of lowering a softening point while enhancing a durability of a glass frit, and may be contained in the range of 40 to 70 wt% in a glass frit. When V₂O₅ exceeds 70 wt%, there is a problem that a calcination of the glass frit easily becomes difficult. When V₂O₅ is less than 40 wt%, the effect of lowering a softening point of the glass frit is difficult to be sufficiently exhibited, and a problem may also occur in a durability of the glass frit.

TeO₂ may have an effect of increasing fluidity of a glass frit and may be contained in the range of 5 to 25 wt% in a glass frit. When TeO₂ exceeds 25 wt%, it is difficult to sufficiently lower a softening point, so that a calcination may not be made. When TeO₂ is less than 5 wt%, a problem may occur that a vitrification of the glass frit may be difficult depending on a balance relation with other components.

CuO may be contained in the range of 1 to 5 wt% in order to match a CTE of a glass frit and satisfy durability. When CuO exceeds 5 wt%, a problem that fluidity of the glass frit is lowered may occur. When CuO is less than 1wt%, it may not obtain a required CTE of the glass frit.

ZnO may be contained in the range of 1 to 12 wt% in order to match a CTE of a glass frit and to satisfy durability. When ZnO exceeds 12wt%, fluidity of the glass frit is degraded and an adhesive force with a glass substrate may be a problem. When ZnO is less than 1 wt%, it may not obtain a required CTE of the glass frit.

BaO may be contained in the range of 1 to 5 wt% in order to match a CTE of a glass frit and to satisfy durability. When CuO exceeds 5 wt%, a problem that fluidity of a glass frit may be lowered may occur. When CuO is less than 1 wt%, it may not obtain a required CTE of the glass frit.

Further, the glass frit according to this application may further include at least one of Bi₂O₃, Mn02, Fe₂O₃ and Ag₂O. Preferably, at least one of Bi₂O₃, MnO₂, Fe₂O₃ and Ag₂O may be included in 25 wt% or less in order to increase the durability of the glass frit and lower the crystallization tendency of the glass frit. When at least one of Bi₂O₃, MnO₂, Fe₂O₃ and Ag₂O exceeds 25 wt%, it is possible to lower the CTE; however, a problem that a sealing performance is degraded may occur.

Further, it is preferable that P₂O₅, V₂O₅, and TeO₂ included in the glass frit according to this application are contained so as to satisfy the following relational expressions from a viewpoint of a calcination stability related to the crystallization tendency. [Relational expression] $\begin{matrix}{V}_{2} {O}_{5} \left(wt%\right) / {P}_{2} {O}_{5} \left(wt%\right) < 3.5 \\ {P}_{2} {O}_{5} \left(wt%\right) + {TeO}_{2} \left(wt%\right) > 30\end{matrix}$

As the content of V₂O₅ increases, a glass transition point of the glass frit decreases and the temperature at which the sealing can be made may be lowered. However, at the same time, as a crystallization tendency of the glass frit is increased, it is preferable to have an optimum ratio in a relation to P₂O₅ and TeO₂. Accordingly, it is highly preferable that the glass frit according to this application has a composition ratio that satisfies all of the above relational expressions.

Further, it is preferable that the glass frit according to this application has a CTE of 80 to 100 x 10⁻⁷/°C particularly in a viewpoint of matching a CTE of the glass frit with that of a glass substrate, and it is preferable that a softening point is 400°C or less. The CTE corresponds within the range of 80 to 100 x 10⁻⁷/°C, so that the glass frit according to this application can reduce an occurrence of an adhesive force degradation to improve a sealing reliability. Further, the softening point of the glass frit according to this application may correspond to 400°C or less, and thus, a sealing process of the glass substrate may be performed at the low temperature of 400 °C or less.

In addition, the glass frit according to this application has the above-mentioned component system and composition ratio, so that it has an advantageous effect that it can have a low CTE and can lower the softening point even if an inorganic filler is not included or is included in a minimum content.

If necessary, the glass frit according to this application may include a small amount of inorganic filler. The inorganic filler is a crystalline inorganic particle that has a low CTE, and specifically, may use at least one of zirconium phosphate, zirconium phosphate tungstate, zirconium, Li₂O-Al₂O₃-SiO₂, beta-eucryptite and zirconium tungstate.

### 2. A lead-free low temperature calcined glass frit suitable for tempered glass

Further, the present inventors completed a new glass frit that is capable of a calcination at a low temperature and has a low crystallization tendency so that it can be particularly applied to a sealing process of tempered glass.

A glass frit according to another embodiment of this application may include 30 to 50 wt% of V₂O₅, 30 to 50 wt% of TeO₂, 1 to 5 wt% of Cu, 1 to 5 wt% of BaO, 1 to 10 wt% of at least one of MnO₂, FeO₃, SnO, MoO₃ and ZnO, and 5 to 30 wt% of an inorganic filler.

V₂O₅ may have an effect of lowering a softening point while enhancing a durability of a glass frit, and may be contained in a range of 30 to 50 wt% in the glass frit. When V₂O₅ exceeds 50 wt%, there is a problem that a calcination of the glass frit easily becomes difficult. When V₂O₅ is less than 30 wt%, an effect of lowering a softening point of the glass frit is difficult to be sufficiently exhibited and a problem may occur in durability of the glass frit.

TeO₂ may have an effect of enhancing fluidity of a glass frit and may be contained in a range of 30 to 50 wt% in the glass frit. When TeO₂ exceeds 50 wt%, it may be difficult to sufficiently lower a softening point, so that it may not be calcined. When TeO₂ is less than 30 wt%, a problem may occur that a vitrification of the glass frit is difficult according to a balance relation with other components.

CuO may be contained in the range of 1 to 5 wt% in order to match a CTE of a glass frit and satisfy durability. When CuO exceeds 5 wt%, a problem that fluidity of the glass frit is lowered may occur. When CuO is less than 1wt%, it may not obtain a required CTE of the glass frit.

BaO may be contained in the range of 1 to 5 wt% in order to match a CTE of a glass frit and to satisfy durability. When CuO exceeds 5 wt%, a problem that fluidity of the glass frit is lowered may occur. When CuO is less than 1wt%, it may not obtain a required CTE of the glass frit.

The glass frit according to another embodiment of this application may include at least one of MnO₂, FeO₃, SnO, MoO₃ and ZnO in the range of 1 to 10 wt%. When at least one of MnO₂, FeO₃, SnO, MoO₃ and ZnO exceeds 10 wt%, it is difficult to match a CTE of the glass frit and a problem may occur in durability and fluidity. Likewise, when at least one of Mn02, FeO₃ SnO, MoO₃ and ZnO is less than 1 wt%, a problem may occur that it is difficult to match the CTE of the glass frit and a required property cannot be obtained.

In addition, the glass frit according to another embodiment of this application may include 5 to 30 wt% of the inorganic filler. More preferably, the inorganic filler may be included in 10 to 20 wt% in order to provide the glass frit having the excellent matching of the CTE and durability. When the inorganic filler exceeds 30 wt%, a sealing performance of the glass frit may be degraded and a problem may occur in water resistance. When the inorganic filler is less than 5 wt%, a problem may occur that it is difficult to match a CTE of the glass frit and a low temperature calcination may become difficult.

The inorganic filler according to another embodiment of this application may be a crystalline inorganic particle that has a low CTE, and specifically, may use at least one of zirconium phosphate, zirconium phosphate tungstate, zirconium, Li₂O-Al₂O₃-SiO₂, beta-eucryptite and zirconium tungstate.

Further, the glass frit according to another embodiment of this application may include at least one of Ag₂O and Bi₂O₃ additionally, and at least one of Ag₂O and Bi₂O₃ may be preferably included in 5 to 20 wt% to enhance the durability of the glass frit and lower the crystallization tendency of the glass frit. If at least one of Ag₂O and Bi₂O₃ exceeds 20 wt%, it is possible to lower the CTE; however, a problem that the sealing performance may be degraded may occur. When at least one of Ag₂O and Bi₂O₃ is less than 5 wt%, the problem may occur that it is difficult to match the CTE and the low temperature calcination may become difficult.

Further, it is preferable that V₂O₅ and TeO₂ included in the glass frit according to another embodiment of this application are contained so as to satisfy the following relational expression from a viewpoint of a calcination stability related to the crystallization tendency.

### [Relational expression]

${V}_{2} {O}_{5} \left(wt%\right) / {TeO}_{2} \left(wt%\right) < 1$

As the content of V₂O₅ increases, the glass transition point of the glass frit is lowered, and thus, a temperature at which a sealing can be made may be lowered, but at the same time, a crystallization tendency of the glass frit is increased, so that it is preferable to have an optimum ratio in a relation with TeO₂. Accordingly, it is preferable that the glass frit according to this application has a ratio of V₂O₅ (wt%) to TeO₂ (wt%) of less than 1.

Further, it is preferable that the glass frit according to another embodiment of this application has a CTE of 70 to 90 x 10⁻⁷/°C particularly in a viewpoint of matching of a CTE with a tempered glass substrate. The CTE corresponds within the range of 70 to 90 x 10⁻⁷/°C, and thus, the glass frit according to another embodiment of this application can reduce an occurrence of an adhesion force degradation and improve a sealing reliability.

### <Glass frit paste>

Next, glass frit paste according to this application may include 100 parts by weight of the glass frit mentioned above and 10 to 100 parts by weight of an organic vehicle.

When the organic vehicle is less than 20 parts by weight or exceeds 100 parts by weight, an application process may become difficult as a viscosity of paste is too high or too low.

The organic vehicle may include an organic solvent and an organic binder. The organic solvent may use a solvent such as α-terpineol or butyl carbitol. The organic binder may be ethyl cellulose, but is not limited thereto.

### <Vacuum glass assembly>

A vacuum glass assembly may mean an assembly that includes two or more glass substrates and a vacuum is maintained between two glass substrates. The vacuum glass assembly may be used in a home appliance such as a refrigerator, a microwave, and a washing machine, or an electronic component in a lot of electronic equipment.

A glass frit according to this application can be used as a sealing material for the vacuum glass assembly.

When applying the glass frit paste according to this application as the sealing material, a sealing process is possible at a temperature less than 400°C, which corresponds to a low temperature. Therefore, when the glass frit paste according to this application is applied as the sealing material, it is possible to have an advantageous effect that a risk of breakage of a glass substrate is lowered and a process cost can be lowered.

The vacuum glass assembly according to this application may include: a first glass substrate; a second glass substrate spaced apart to be opposite to the first glass substrate; and a sealing material that is arranged along an edge of the first or second glass substrate and attaches the first and second glass substrates, and seals a space between the first glass and second glass, and the sealing material may be formed by being applied with a paste according to this application and calcined.

The first glass substrate and the second glass substrate of this application can be selected according to a requirement of an article to which the vacuum glass assembly is applied, and are not particularly limited.

However, as another embodiment of this application, it is particularly preferable that the glass frit including 30 to 50 wt% of V₂O₅, 30 to 50 wt% of TeO₂, 1 to 5 wt% of Cu, 1 to 5 wt% of BaO, 1 to 10 wt% of at least one of MnO₂, FeO₃, SnO, MoO₃ and ZnO, and 5 to 30 wt% of an inorganic filler may be used for the vacuum glass assembly with which tempered glass is applied.

The vacuum glass assembly with which the tempered glass is applied can generate a tempered annealing phenomenon in the tempered glass when it is exposed to a high temperature heat treatment process such as a sealing process. Accordingly, the vacuum glass assembly with which the tempered glass is applied has a problem that the heat treatment process cannot be applied at the high temperature.

However, when the glass frit paste according to another embodiment of this application is used as the sealing material, the sealing process is possible at a temperature less than 350°C, which corresponds to a low temperature. Therefore, when applying the glass frit paste according to this application as the sealing material, the tempered annealing phenomenon may not occur in the tempered glass applied in the vacuum glass assembly.

Further, as the sealing material, the above-mentioned glass frit paste may be used.

Hereinafter, a specific aspect of this application will be described through the embodiment.

### <Embodiment and Experimental Example of lead-free low temperature calcined glass frit>

### 1. Embodiments and Comparative Examples

### <Production of glass frit>

A Glass frit that has a composition ratio described in Table 1 below was prepared. The raw materials of each component were sufficiently mixed in a V-mixer for 3 hours. Here, BaCO₃ was used as a raw material of BaO, and NH₄H₂PO₄ was used as a raw material of P₂O₅, and the same components as those described in Table 1 were used for the remaining components. A mixed material was sufficiently melted at 800 to 1000°C for 1 hour and quenched on a quenching roller to obtain a glass cullet.

The glass cullet obtained in the above procedure was grinded for about 1 hour using a jet mill after controlling an initial particle size by a ball mill, and then passed through a 325 mesh sieve (ASTM C285-88) to control a particle size so that a glass powder that did not pass through remained within 1 g.

**[Table 1]**

| component (wt%) | Embodiment | | Comparative Example | |
|---|---|---|---|---|
| | 1 | 2 | 1 | 2 |
| P2O5 | 17.3 | 18.2 | 10.4 | 15.6 |
| V2O5 | 53.3 | 61.3 | 59.8 | 63.9 |
| MnO2 | 0 | 0 | 0 | 0 |
| Fe2O3 | 0 | 0 | 0 | 0 |
| CuO | 4.3 | 4.5 | 0 | 0 |
| ZnO | 3.2 | 3.4 | 8.0 | 5.0 |
| BaO | 1.8 | 1.9 | 0 | 5.0 |
| Bi2O3 | 0 | 0 | 0 | 0 |
| TeO2 | 18.3 | 8.8 | 18.2 | 8.0 |
| Ag2O | 1.8 | 1.9 | 3.6 | 2.5 |

### <Paste preparation>

An organic vehicle was prepared by mixing α-terpineol and ethyl cellulose in an appropriate ratio, and then mixed with the glass frit prepared in the above in an appropriate ratio to prepare paste. Three roll mills were used for a uniform mixing.

### <Preparation of vacuum glass assembly specimen>

Two glass substrates were provided, and a paste according to Embodiments 1 and 2 and Comparative Examples 1 and 2 was applied to an outer portion of each glass substrate to prepare four glass assembly specimens in total. A vacuum evacuation and a sealing process were performed at 400°C for these glass assemblies. Accordingly, a total of four glass assembly specimens were completed.

### 2. Experimental Example

The glass frit, the paste, and the specimen prepared in the above Embodiments and Comparative Examples were measured as follows, and the result thereof is described in Table 2.

### (1) Glass transition temperature (Tg)

A glass transition point was measured at a heating rate of 10°C/min using a TMA instrument (TMA-Q400 TA instrument).

### (2) Coefficient of thermal expansion (CTE (x 10⁻⁷/°C))

A CTE was measured at a heating rate of 10°C/min using a TMA instrument (TMA-Q400 TA instrument).

### (3) Half Ball temperature

When a glass frit exists in the form of a powder at a heating rate of 10°C/min using a high temperature microscope, it was observed when it is shrunk at most and when it has a form of Half Ball according to a temperature.

### (4) Water resistance

The specimen were immersed in a constant temperature bath of distilled water at 90°C and maintained for 48 hours to observe a color change and a weight change of the distilled water. An increase and decrease rate of the weight of less than 1% was shown as O, and an increase and decrease rate of the weight of 1% or more was shown as X by measuring a weight after immersion.

### 5. Calcination stability

A glass frit powder was filled and hot pressed into a metal mold, and heated to 600°C at 10 °C/min to observe a crystallization or not after calcination. ⊚: Crystallization does not occur and a gloss is very good and ○: crystallization does not occur and a gloss is good, and X: crystallization occurs and there is no gloss.

**[Table 2]**

| | Embodiment | | Comparative Example | |
|---|---|---|---|---|
| | 1 | 2 | 1 | 2 |
| Glass transition temperature (°C) | 299.1 | 286 | 264.5 | 279.1 |
| Coefficient of thermal expansion (CTE(x 10⁻⁷/°C)) | 90 | 88.3 | 110 | 95 |
| Half Ball temperature (°C) | 380 | 360 | 420 | 430 |
| Evaluation of water resistance | ○ | ○ | X | X |
| Evaluation of calcination stability | ⊚ | ○ | X | X |

As described in Table 2, in the embodiments according to this application, it is possible to confirm that a temperature of a half ball corresponds to 400°C or less and a calcination is possible at a low temperature, and also, a CTE corresponds to 90 to 100 and it is matched with that of a glass material, and a water resistance, and a calcination stability is excellent.

The above Comparative Examples are for a glass frit that has a P₂O₅-V₂O₅-TeO₂ component system, and they have been confirmed that a water resistance and a calcination stability is unsatisfactory as a softening point is high and a sealing is not properly made compared to the embodiment.

### <Embodiments and Experimental Examples of lead-free low temperature calcined glass frit suitable for tempered glass>

### 1. Embodiments and Comparative Examples

### <Preparation of glass frit>

A glass frit that has a composition ratio described in Table 3 below was prepared. The raw materials of each component were thoroughly mixed in a V-mixer for 3 hours. Here, BaCO₃ was used as a raw material of BaO, and the same components as those described in Table 3 were used for the remaining components. A mixed material was sufficiently melted at 800 to 1000°C for 1 hour and quenched on a quenching roller to obtain a glass cullet.

The glass cullet obtained in the above procedure was grinded for about 1 hour using a jet mill after controlling an initial particle size with a ball mill, and then passed through a 325 mesh sieve (ASTM C285-88) to control the particle size so that a glass powder that did not pass through remained within 1 g.

The glass cullet thus obtained and a filler according to a content described in Table 3 below were combined and mixed with a ball mill for 2 hours to finally prepare a glass frit.

**[Table 3]**

| Component (wt%) | Embodiment | | | | | Comparative Example | |
|---|---|---|---|---|---|---|---|
| | 3 | 4 | 5 | 6 | 7 | 3 | 4 |
| V2O5 | 35.59 | 31.82 | 31.82 | 33.2 | 35.09 | 24.7 | 53.5 |
| TeO2 | 43.22 | 38.64 | 38.64 | 40.32 | 38.9 | 58.9 | 36.5 |
| CuO | 0.86 | 0.76 | 0.76 | 0.79 | 0.76 | - | - |
| BaO | 1.69 | 1.52 | 1.5 | 1.56 | 1.53 | - | - |
| MnO2 | 0 | 0 | 0 | 0 | 0 | - | - |
| Fe2O3 | 0 | 0 | 0 | 0 | 0 | - | - |
| ZnO | 3.39 | 3.03 | 3.03 | 3.16 | 3.05 | 5.1 | - |
| MoO3 | 0 | 0 | 0 | 0 | 0 | - | - |
| SnO | 0 | 0 | 0 | 7.91 | 0 | - | - |
| Bi2O3 | 0 | 7.58 | 0 | 0 | 7.63 | - | - |
| Ag2O | 0 | 0 | 7.58 | 0 | 0 | 6.89 | 6.05 |
| Filler (Zirconium phosphate) | 15.25 | 16.67 | 16.67 | 13.04 | 13.04 | 4.41 | 3.95 |

### <Paste preparation>

The organic vehicle was prepared by mixing α-terpineol and ethyl cellulose in an appropriate ratio, and then mixed with a glass frit prepared in the above in an appropriate ratio to prepare a paste. Three roll mills were used for uniform mixing.

### <Preparation of vacuum glass assembly specimen>

Two pieces of tempered glass were prepared, and a paste according to Embodiments 3 to 7 and Comparative Examples 3 and 4 was applied to an outer portion of each tempered glass to prepare seven glass assembly specimens in total. A vacuum evacuation and a sealing process were performed at 350°C for these glass assemblies. Accordingly, a total of seven glass assembly specimens were completed.

### 2. Experimental Example

The glass frit, the paste, and the specimen prepared in the above Embodiments and Comparative Examples were measured as described below, and the result thereof is described in Table 4.

### (1) Glass transition temperature (Tg)

A glass transition point was measured at a heating rate of 10 °C/min using a TMA instrument (TMA-Q400 TA instrument).

### (2) Coefficient of thermal expansion (CTE (x 10⁻⁷/°C))

A CTE was measured at a heating rate of 10°C /min by using a TMA instrument (TMA-Q400 TA instrument).

### (3) Half Ball temperature

When a glass frit exists in a form of powder at a heating rate of 10 °C/min by using a high temperature microscope, it was observed when it is shrunk at most and when it has a form of Half Ball according to a temperature.

### (4) Water resistance

The specimen was held in a constant temperature bath of distilled water at 90°C, and maintained for 48 hours to observe a color change and a weight change of distilled water. An increase and decrease rate of a weight less than 1% is shown as O, and an increase and decrease rate of a weight of 1% or more is shown as X by measuring a weight after immersion.

### (5) Calcination stability

A glass frit powder was filled and hot pressed into a metal mold, and heated to 600 °C at a rate of 10 °C/min to observe a crystallization or not after calcination. ⊚: Crystallization does not occur and a gloss is very good and ○: crystallization does not occur and a gloss is good, and X: crystallization occurs and there is no gloss.

**[Table 4]**

| | Embodiment | | | | | Comparative Example | |
|---|---|---|---|---|---|---|---|
| | 3 | 4 | 5 | 6 | 7 | 3 | 4 |
| Glass transition temperature (°C) | 269.3 | 272 | 259.5 | 264.2 | 273.1 | 257.1 | 261.5 |
| Coefficient of thermal expansion (CTE( x 10⁻⁷/°C)) | 82.2 | 82 | 83.3 | 81 | 82.1 | 88 | 90 |
| Half Ball temperature (°C) | 340 | 340 | 330 | 350 | 330 | 420 | 400 |
| Evaluation of water resistance | ○ | ○ | ○ | ○ | ○ | X | X |
| Evaluation of calcination stability | ⊚ | ○ | ⊚ | ○ | ⊚ | X | X |

As described in Table 4, in the embodiment according to this application, it is possible to confirm that a half ball temperature corresponds to 340°C or less, so that a calcination is possible at a low temperature, and a CTE corresponds to 80 to 85, which is matched with that of a tempered glass substrate, and a water resistance and a calcination stability are excellent.

The above Comparative Examples are for a glass frit that has an Ag₂O-V₂O₅-TeO₂ component system, and it is confirmed that the glass frit is unsatisfactory in water resistance and calcination stability since it has a high softening point, and a sealing is not properly made as compared with the embodiment.

While this application has been described hereinabove, this application is not limited by the embodiment disclosed in the present specification, and it is apparent that various changes can be made by those skilled in the art within the scope of the technical idea of this application. In addition, although the embodiment is not described by explicitly describing the working effect according to the configuration of this application while describing the embodiment of this application in the above, it is needless to say that the predictable effect has to be also acknowledged by the corresponding configuration.

## Claims

1. A glass frit, comprising:
5 to 25 wt% of P₂O₅,
40 to 70 wt% of V₂O₅,
5 to 25 wt% of TeO₂,
1 to 5 wt% of CuO,
1 to 12 wt% of ZnO, and
1 to 5 wt% of BaO.

2. The glass frit of claim 1, **characterized in that** the content of P₂O₅, V₂O₅, and TeO₂ satisfy the following relational expression. [Relational expression] $\begin{matrix}{V}_{2} {O}_{5} \left(wt%\right) / {P}_{2} {O}_{5} \left(wt%\right) < 3.5 \\ {P}_{2} {O}_{5} \left(wt%\right) + {TeO}_{2} \left(wt%\right) > 30\end{matrix}$

3. The glass frit of claim 1, **characterized in** further comprising at least one of Bi203, MnO₂, Fe₂O₃, and Ag₂O.

4. The glass frit of claim 1, **characterized in that** the coefficient of thermal expansion (CTE) of the glass frit is within a range of 80 to 100 x 10⁻⁷/°C after calcination.

5. The glass frit of claim 1, **characterized in that** a softening point is 400°C or less.

6. A glass frit, comprising:
30 to 50 wt% of V₂O₅,
30 to 50 wt% of TeO₂,
1 to 5 wt% of CuO,
1 to 5 wt% of BaO,
1 to 10 wt% of at least one of MnO₂, FeO₃, SnO, MoO₃ and ZnO, and
5 to 30 wt% of an inorganic filler.

7. The glass frit claim 6, **characterized in that** the content of V₂O₅ and the content of TeO₂ satisfy the following relational expression. [Relational expression] ${V}_{2} {O}_{5} \left(wt%\right) / {TeO}_{2} \left(wt%\right) < 1$

8. The glass frit of claim 6, **characterized in** comprising 10 to 20 wt%. of the inorganic filler

9. The glass frit of claim 6, further comprising at least one of Ag₂O and Bi₂O₃.

10. The glass frit of claim 6, **characterized in that** the glass frit has a coefficient of thermal expansion (CTE) after calcination in the range of 70 to 90 x 10⁻⁷/°C.

11. A glass frit paste, comprising 100 parts by weight of the glass frit described in any one of claims 1 to 10, and 10 to 100 parts by weight of an organic vehicle.

12. A vacuum glass assembly, comprising:
a first glass substrate;
a second glass substrate spaced apart to be opposite to the first glass substrate; and
a sealing material that is arranged along an edge of the first or second glass substrate and attaches the first and second glass substrates, and seals a space between the first glass and the second glass, and
wherein the sealing material is formed by applying the paste described in claim 11 and calcining.
